# EUROPEAN PATENT APPLICATION

(11) **EP 1 586 766 A2**
(43) Date of publication of application: **19.10.2005**
(21) Application number: 04254874.3
(22) Date of filing: 13.08.2004
(51) Int. Cl.: F02N 15/06

(54) **Gear system having a gear installed with shock absorber means in model engine starter**

(30) Priority: 15.04.2004 JP 2004119867
(71) Applicant: Kyosho Corporation, Chiyoda-ku, Tokyo 102-0093 (JP)
(72) Inventor: Otsuki, Naohiko, Tokyo 146-0092 (JP)
(74) Representative: Naylor, Matthew John

(57) **Abstract**

A gear system having a gear installed with shock absorbing means in a model engine starter (S). Said gear system comprises a rotary drive section (31) to generate a turning force' a hub (51) formed with an inclined guide groove (53) axially slanting at a predetermined angle; a starter shaft (61) having a pin (71) mounted at an intermediated portion thereof and an actuator (64) at one tip end thereof, said starter shaft being inserted through said hub to be guided by said inclined guide groove to move said starter shaft such that said actuator is brought into engagement with a model engine crankshaft (C): said gear system comprising a final stage gear (34) loaded with shock absorbing means (41) therein to absorb an impact upon engagement of said actuator with said model engine crankshaft.

## Description

The present invention relates to a gear system having a gear installed with shock absorbing means in a model engine starter to be used for starting the model engine to drive a model car.

In the known model engine starter disclosed in Japanese Utility Model Registration No. 3093337, the turning force of the motor is transmitted by way of transmission gear mechanism in the rotary drive section, where there is provided a hub formed with an inclined guide groove slanting at a predetermined angle with respect to an axis thereof, said hub being rotated to actuate a pin attached to a starter shaft inserted into said hub to move the starter shaft by guide faces of the inclined groove such that an actuator provided at a tip end of said starter shaft is brought into engagement with a connecting pin provided in the crankshaft of the model engine to start the same.

In such known model engine starters, the turning power from the motor is transmitted to the hub by way of the transmission gear mechanism to rotate the hub such that the resultant hub rotation causes the starter shaft rotate and proceed to bring the actuator provided at the tip end of the starter shaft into engagement with the coupling pin provided in the crankshaft of the model engine. Therefore, the impact generated by the start of the model engine can damage or break the actuator and/or the coupling pin as well as gears in the transmission gear mechanism.

The present invention has been devised in order to address or, preferably, solve or ameliorate one or more of these problems.

Accordingly, the present invention provides a gear system having a gear installed with shock absorbing means in a model engine starter having a rotary drive section to generate a turning force; a hub formed with an inclined guide groove axially slanting at a predetermined angle; a starter shaft having a pin mounted at an intermediated portion thereof and an actuator at one tip end thereof, said starter shaft being inserted through said hub to be guided by said inclined guide groove to move said starter shaft such that said actuator is brought into engagement with a model engine crankshaft: said gear system comprising a final stage gear loaded with shock absorbing means therein to absorb an impact upon engagement of said actuator with said model engine crankshaft.

Preferably, said gear system is further characterized in that said shock absorbing means includes support portions circumferentially arranged within said final gear and stop portions arranged in facing relation to said respective support portions; a hub holder to hold said hub therewithin and adapted to be rotated coaxially with said final gear and relative to said final gear between said support portions and said stop portions; and resilient members loaded between said hub holder and said support portions to urge said hub holder to said stop portions.

Preferably, said gear system is further characterized in that said final stage gear is formed with a recess opening in a direction opposite to said hub, said support portions being arranged circumferentially therewithin, said stop portions being provided in facing relation to said support portions and said recess being adapted to be closed by a cover, while said shock absorbing means further includes a hub holder adapted to be rotated coaxially with and relative to said final stage gear between said support portions and said stop portions with said hub being inserted in said hub holder; and bias means loaded between said hub holder and said support portions to urge said hub holder toward said stop portions.

Preferably, said gear system is further characterized in that said bias means includes coil springs.

Preferably, said gear system is further characterized in that said recess, said cover and said hub holder cooperate to prevent said coil springs from buckling.

The invention also provides a use of said gear system in a model engine starter.

Preferred embodiments of the invention will now be described by way of example, with reference to the accompanying drawings, in which:
Fig. 1 is an exploded perspective view of one embodiment of the present invention in which the gear system is used in a model engine starter;

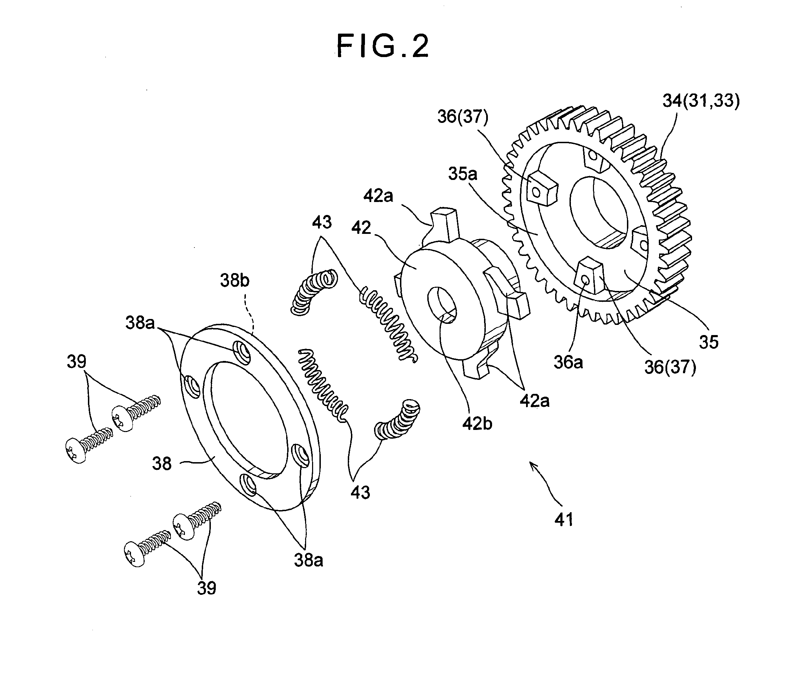

Fig. 2 is an enlarged perspective view of the shock absorber used in the gear system shown in Fig. 1;
Fig. 3 is an explanatory view of the shock absorber being in motion before the actuator is brought into engagement with the coupling pin; and
Fig. 4 is another explanatory view of the shock absorber being in motion when the actuator is brought into engagement with the coupling pin.

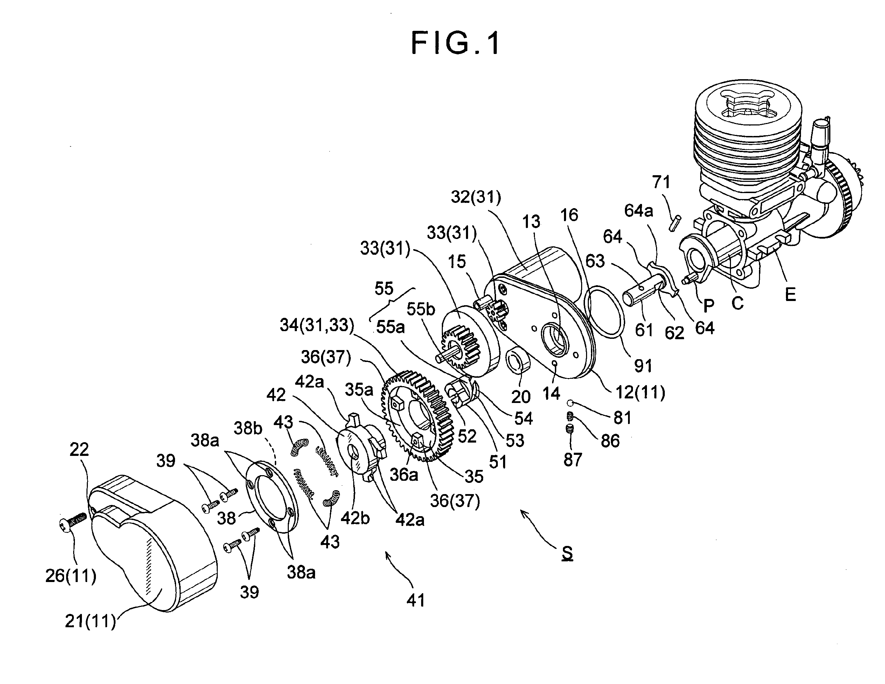

In Fig. 1, the starter S in accordance with one embodiment of the invention to start the model engine E is composed of a housing 11; a rotary drive mechanism 31 installed within said housing; a shock absorber system 41 provided in a final stage gear 34 in the rotary drive section 31; a hub holder 42 composing said shock absorber system 41; a hub 51 adapted to rotate coaxially and together with said hub holder 42 and having a inclined guide groove 53 slanting at a predetermined angle with respect to an axis thereof; a starter shaft 61 rotatably inserted in said hub 51 and said hub holder 42; a pin 71 attached to said starter shaft 61 and adapted to axially move in the hub 51 along a forward guide face 54 and a rearward guide face 55 which define said inclined guide groove 53, an actuator arm 64 adapted for engagement with and disengagement out of a connecting pin P provided in the crankshaft C of the model engine E; a ball 81 accommodated in a tapped hole (not shown) in the housing 11 to slidably contact a circumferential face of the starter shaft 61 including a D cut portion 62 therein; bias means to prevent the hub 51 and starter shaft 61 from rotating together when no resistance works the actuator arm 64; and an O ring 91.

Said housing 11 is further composed of a front housing section 12, a rear bowl member 21 provided in facing relation thereto, fastening screws 26 to secure the rear bowl member 21 to said front housing section 12.

Said front housing section 12 is provided with a cylindrical portion 16 jutting in the direction of a front face side (upper right side) thereof.

Said front housing section 12 is formed with a bore 13 of a round cross section rearwardly having an inner diameter sized to receive a bearing therein to be described later and mounting holes 14 for attaching said housing 11 to the model engine E. Further, said front housing section 12 includes a boss 15 having a tapped hole for securing said rear bowl member 21 to said front housing section 12.

As not shown, said cylindrical portion 16 is further formed with a bore 13 opening in the direction opposite to said rear bowl member 21 and cylindrical recess coaxially with said bore 13, a circumferentially extending O-ring groove and a tapped hole to communicate from said O-ring groove to said bore 13.

It is to be noted that the numeral 20 denotes a bearing to be attached into the bore 13 rearwardly of the position where the tapped hole 19 is formed such that said bearing will not move in the axial direction and adapted to receive a starter shaft 61 inserted thereinto from the upper right hand.

Next, the rearward bowl member 21 is formed with a mounting holes 22 in correspondence with the boss 15 for mounting said rear bowl member 21 to said front housing section 12 and, although not shown, there is provided a bearing portion 23 to receive one of the gears constituting a transmission gear mechanism 33 which will be described later such that said bearing portion is adapted to rotate. Again though not shown, there is further provided a recess 24 to receive a disc-shaped cover 38 to be described later such that said disc-shaped cover 38 is adapted to rotate.

Next, the rotary drive 31 is composed of a motor 32 attached to the front housing portion 12 to generate a turning force and a transmission gear mechanism 33 to transmit the turning speed of the motor 32 through speed reduction.

Then, there is provided a final gear 34 constituting the transmission gear mechanism 33 and said final gear is formed with a cylindrical recess 35 opening in a direction opposite to the hub 51, supports 36 arranged for example at 90 degree intervals in the inner periphery of the recess 35, stop portions 37 (the support portions 36 also acting as the stop portions 37) in facing relation to said support portions 36, an annular cover 38 to close the recess 35 and fixing screws 39 for attaching the cover 38 to the support portions 36, said cover 38 slightly extending rearwardly.

It is to be noted that the supports 36 are formed with tapped holes 36a into which said fixing screws 39 are screwed while the cover 38 is formed with holes 38a into which the fixing screws are inserted.

Said shock absorber 41 is composed of the support portions 36 (and the stop portions 37) provided in the final stage gear 34 constituting the rotary gear section 31; a hub holder 42 accommodated in said recess 35 and coaxially with the gear 34 to rotate relative thereto or between the support portions 36 and the stop portions 37 with the hub 51 being attached thereto; and bias means in the form of a coil spring 43 loaded between the hub holder 42 and the support portions 36 for urging the hub holder 42 toward the stop portions 37.

Then, the coil spring 43 is prevented from buckling by an inside wall face 35a including an inner circumferential face which defines the recess 35, a front surface 38b of the cover 38 facing the inside of said recess 35 and an outer circumferential surface 42a of the hub holder 42.

It is to be noted that said hub holder 42 is formed with a bore 42b in which the starter shaft 61 is rotatably received.

The hub 51 is formed with a bore 52 therethrough and an inclined guide groove 53 therearound, said starter shaft 61 being rotatably inserted into said bore 52.

Said inclined guide groove 53 is defined by a front guide face 54 slanting at a predetermined angle with respect to an axis thereof and a rear guide face 55 slanting at a predetermined angle with respect to said axis.

It is to be noted that the rear guide face 55 includes an inclined rear guide face 55a slanting at a predetermined angle with respect to said axis and a parallel face 55b extending in parallel to the axis to continue into said inclined rear guide face 55a toward the coupling pin P.

Next, the starter shaft 61 is formed with a cutout 62 longitudinally extending, rearwardly of which a blind hole 63 is formed for receiving a pin 71 while the actuator arm 64 is integrally formed forwardly thereof.

Then, said actuator arm 64 is formed with constricted portions 64a to receive the connecting pin P.

Next, said bias means is composed of a ball 81 accommodated in the tapped hole 22 formed in the housing 11, a coil spring 86 to urge said ball 81 to the circumferential surface of the starter shaft 61 formed with the D-shaped cutout 62 and a screw 87 adapted to be screwed in said tapped hole 22 and adjust the urging force of the coil spring 86.

Next, the method of assembling the starter S will be explained.

First, the hub holder 42 is accommodated in the recess 35 of the gear 34 such that the front cylindrical portion of the hub holder 42 is rotated within the cylindrical hole in the gear 34 while loading coil springs 43 between the support portions 36 and the hub holders 42 such that said coil springs 43 urges the hub holder 42 toward the stop portions 37 to bring the hub holder 42 to the stops 37 in abutting engagement.

Then, the cover 38 is fitted into the recess 35 before the fixing screws 39 are inserted into the holes 38a until said screws 39 are screwed into the tapped holes 36a, thus completing the assembly work of the shock absorber 41 to the gear 34.

Next, the bearing 20 is inserted into the bore 13 from a direction opposite to the cylindrical portion 16 after the motor 32 is attached to the front side of said front housing section 12.

Then, the tip end of the starter shaft 61 opposite to actuator arm 64 is inserted into the bore 13 through the bearing 20 from the cylinder 16 side thereof.

Next, the ball 81 and then the coil spring 86 are inserted into the tapped hole 19 in the housing 11 and then the screw 87 is screwed into the tapped hole 19 to prevent the ball 81 and the coil spring 86 from dropping off the tapped hole 19 while the urging force of the ball 81 to the starter shaft 61 is adjusted.

Thus, with the ball 81 and the coil spring 86 being inserted into the tapped hole 19 and the screw 87 plugging the hole, the starter shaft 61 is rotated with respect to said front housing section 12 such that the ball 81 is caused to be rested into the D-shaped cutout 62 to prevent the starter shaft 61 from falling off from the front housing section 12.

Next, the O-ring groove 21 in the front housing section 12 receives an O-ring 91 thereinto.

In this state, the cylindrical portion 16 of the front housing section 12 is inserted into the engine E before a gap between the front housing section 12 and the model engine E is sealed by the O-ring 91.

Said front housing section 12 is secured to the model engine E by screwing mounting screws (not shown) to the model engine E through the four mounting holes 14.

Next, the pin 71 is inserted into the mounting hole 63 formed in the starter shaft 61 which in turn has been inserted into the cylindrical portion 16 and the front housing section 13. Thereafter, the rear portion of the starter shaft 61 is oriented to face the opening of the inclined guide groove 53 and inserted into said bore 52 such that the pin 71 is guided into the inclined guide groove 53 until the hub 51 is abutted against the bearing 20.

In this state, the starter shaft 61 is inserted into the bore 42b formed in the hub holder 42 from the side opposite to the cover 38 on the gear 34 such that said hub 51 is attached to the hub holder 42 to rotate together therewith coaxially.

Then, a gear 33 is arranged between the gear attached to the shaft of the motor 32 and the gear 34.

Finally, the rear bowl member 21 is overlaid on the front housing section 12 such that the gears in the transmission gear mechanism 33 may be rotated before the fastening screw 26 is screwed into the tapped hole in the boss 15 to secure the rear bowl member 21 to the front housing section 12, thus completing the assembly and mounting work of the starter S.

Next, the start of the model engine E will be explained.

First, as shown in Fig. 1, the gear 34 is rotated in the clockwise direction to cause the hub holder 42 and the hub 51 to in turn rotate in the clockwise direction.

Even if the hub 51 is rotated in this way, the starter shaft 61 is prevented by the ball 81 under the urged of the coil spring 86 from being rotated together with the hub 51 with the result that the pin 71 is pressed by the rear inclined guide face 55a to proceed as far as the parallel face 55b or toward the coupling pin P of the engine E.

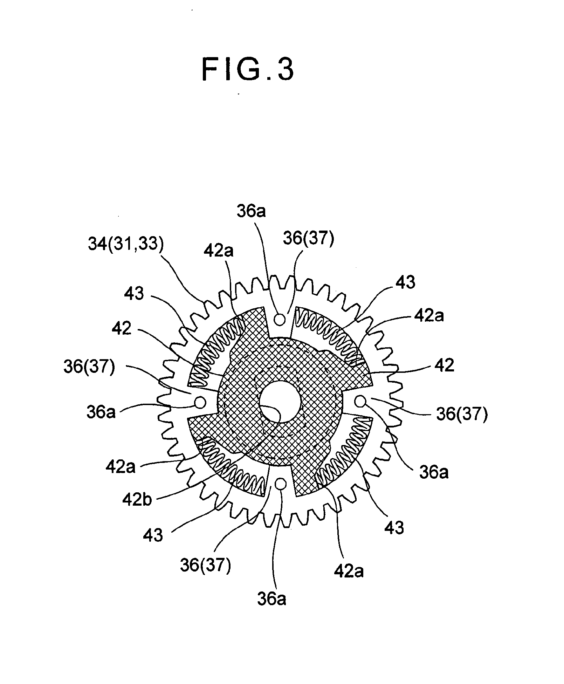

Then, the actuator arm 64 is brought into engagement with the coupling pin P of the crankshaft C to cause the hub holder 42 so far maintained in the state shown in Fig. 3 to rotate in the counterclockwise direction while compressing the coil springs 43 against their urge such that the actuator arm 64 V absorbs an impact from engagement of the actuating arm with the coupling pin P while causing the crankshaft C to rotate, thus starting the model engine E.

It is to be noted in this connection that the start of the engine E accelerates the crankshaft C to rotate faster than the hub 51. In other words, the rotation of the hub 51 is slower than the crankshaft C such that the pin 71 is guided by the front guide face 54 of the inclined guide groove 53 to forcibly move the starter shaft 61 away from the crankshaft C and the actuator arm 64 out of engagement with the coupling pin P back to the initial position.

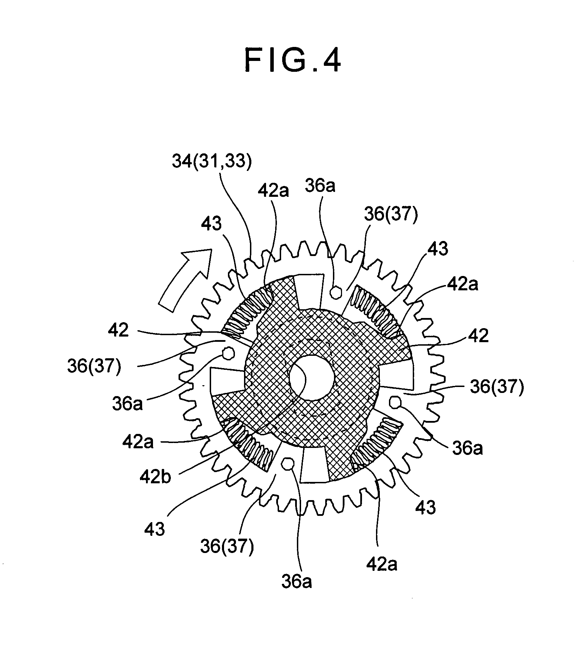

In the process that the pin 71 of the starter shaft 61 returns to the initial position in this way, the hub holder 42 returns under the urge of the coil springs 43 to the position shown in Fig. 3 from the position shown in Fig. 4.

Therefore, the stoppage of the motor 32 after the start of the model engine E brings the system ready for the next start of the model engine E.

In the above embodiment of the invention as detailed in the foregoing, the final stage gear 34 in the rotary drive section is provided with the shock absorbing mechanism 41 which functions to absorb an impact upon engagement of the actuator arm 64 with the coupling pin P Said final stage gear 34 of the shock absorbing mechanism 41 has support portions 36 circumferentially arranged therein and stop portions 37 arranged in facing relation to said support portions 36. Between said support portions 36 and said stop portions 37, the hub holder 42 is provided in said final gear 34 to rotate coaxially between the supports 36 and the stops 37 within the final stage gear 34 while the hub 51 is attached therein. There are further provided bias means between said hub holder 42 and said support portions 36 such that said hub holder 42 is urged towards the stop portions 37. Alternatively, the final stage gear 34 may be formed with a recess 35 opening at the opposite side to the hub 51, support portions 34 arranged in a circumferential direction within said recess 36, stop portions 37 arranged within said recess 35 in facing relation to said support portions 34. Said recess 35 is closed by the cover 38 to contain the shock absorber mechanism 41 within the recess 35 formed with the support portions 36 and the stop portions 37. Said hub holder 42 is provided to rotate relative to the final stage gear between the support portions 36 and the stop portions 37. Between said hub holder 42 and said support portions 36 are loaded the bias means to urge said hub holder 42 to the stop portions 37. Thus, any impact upon engagement of the actuator arm 64 with the coupling pin P is absorbed by the shock absorber mechanism 41.

Therefore, any breakage or fracture of the actuator arm or the coupling pin P due to impact upon start of the model engine E is prevented to protect the transmission gear mechanism 33.

Then, the bias means in the form of the coil springs 43 is easily obtainable and can be manufactured at a low cost.

Further, since the face 35a defines part of the recess 35 while the face 38b of the cover 38 faces the recess 35, the outer surface 42a of the hub holder 42 well cooperates therewith to prevent the coils springs 43 from buckling to ensure that the desired result is fully obtained.

Then, the provision of the front guide face 54 and the rear guide face 55 in the hub 51 to guide the pin 71 attached to the starter shaft 61 assures a quick release of the actuator arm 64 and the coupling pin P from the engagement by the movement of the pin 71 along the front guide face 54 upon the start of the model engine E.

Therefore, the possibility of power loss of the model engine is eliminated.

Further, the provision of the parallel face 55 to the axis thereof in the rear guide face 55 remote from the coupling pin P assures positive transmission of the drive power of the rotary drive section 31 to the crankshaft C of the model engine E.

Further, the provision of the ball 81 and the coil spring 86 urged by the screw 87 assures the ball 81 being pressed to the circumference of the starter shaft 61 with the result that the hub 51 and the starter shaft 61 are prevented from rotating together until the actuator arm 64 is brought into engagement with the coupling pin P for the transmission of the driving force or when no resistance is exerted to the actuator arm 64.

Therefore, the starter shaft 61 is easily moved to start the model engine E positively.

In the above described embodiment, coil springs 43 are shown as bias means but resilient members of such as rubber or (soft) urethane foam can be substituted to achieve the same function.

In accordance with this invention, there is loaded shock absorbing means in the final stage gear to absorb an impact upon engagement of the actuator with a coupling pin of the model engine crankshaft. Said shock absorbing means includes support portions arranged circumferentially in said final stage gear, stop portions arranged in facing relation to the respective supports, a hub holder holding the hub and adapted to be rotated coaxially and relative to said final gear between said support portions and said stop portions and bias means loaded between said hub holder and said support portions to urge said hub holder towards said stop portions. Alternatively, said final stage gear may be formed with a recess opening in the direction opposite to said hub, support portions arranged circumstantially within said recess, stops arranged in facing relation to the respective support portions and a cover to close said recess. In this modification, the shock absorbing means includes said support portions, said stop portions, a hub holder holding the hub and adapted to be rotated coaxially and relative to said final gear between said support portions and said stop portions and bias means loaded between said hub holder and said support portions to urge the hub holder towards the stop portions. As a result, an impact generated upon engagement of the actuator with the coupling pin of the model engine crankshaft.

Therefore, any breakage or damage to the actuator and the coupling as well as the gears in the transmission gear system upon the start of the model engine due to the impact resulting therefrom may be prevented.

Further, since coil springs are used as bias means, the procurement thereof is easy and the manufacture thereof is possible at a low cost.

Further, since the recess of the final stage gear, the cover closing the recess and the hub holder cooperate to define surfaces, preventing the coils springs from buckling ensure that the desired performance is fully accomplished.

## Claims

1. A gear system having a gear installed with shock absorbing means in a model engine starter having a rotary drive section to generate a turning force; a hub formed with an inclined guide groove axially slanting at a predetermined angle; a starter shaft having a pin mounted at an intermediated portion thereof and an actuator at one tip end thereof, said starter shaft being inserted through said hub to be guided by said inclined guide groove to move said starter shaft such that said actuator is brought into engagement with a model engine crankshaft:
said gear system comprising a final stage gear loaded with shock absorbing means therein to absorb an impact upon engagement of said actuator with said model engine crankshaft.

2. A gear system as set forth in claim 1, wherein said shock absorbing means includes support portions circumferentially arranged within said final gear and stop portions arranged in facing relation to said respective support portions; a hub holder to hold said hub therewithin and adapted to be rotated coaxially with said final gear and relative to said final gear between said support portions and said stop portions; and resilient members loaded between said hub holder and said support portions to urge said hub holder to said stop portions.

3. A gear system as set forth in claim 2, wherein said final stage gear is formed with a recess opening in a direction opposite to said hub, said support portions being arranged circumferentially therewithin, said stop portions being provided in facing relation to said support portions and said recess being adapted to be closed by a cover, while said shock absorbing means further includes a hub holder adapted to be rotated coaxially with said final stage gear relative to said final stage gear between said support portions and said stop portions with said hub being inserted in said hub holder; and bias means loaded between said hub holder and said support portions to urge said hub holder toward said stop portions.

4. A gear system as set forth in claim 2 or 3, wherein said bias means includes coil springs.

5. A gear system as set forth in claim 4, wherein said recess, said cover and said hub holder cooperate to prevent said coil springs from buckling.

6. Use of a gear system according to any one of claims 1 to 5 in a model engine starter.
